# EUROPEAN PATENT APPLICATION

(11) **EP 1 119 168 A2**
(43) Date of publication of application: **25.07.2001**
(21) Application number: 01100127.8
(22) Date of filing: 12.01.2001
(51) Int. Cl.: H04M 3/428

(54) **Internet call waiting service for wireless connections**

(30) Priority: 20.01.2000 US 177052 P; 16.09.2000 US 663439
(71) Applicant: AT&T Corp., New York, NY 10013-2412 (US); AT&T WIRELESS SERVICES, INC., Redmond, WA 98052 (US)
(72) Inventor: Burg, Frederick, Murray, West Long Branch, New Jersey 07764 (US); Kanefsky, Steve, Redmond, Washington 98052 (US); Saraswat, Vijay, Anand, Mountains Lakes, New Jersey 07046 (US)
(74) Representative: Modiano, Guido, Dr.-Ing.

(57) **Abstract**

"Wireless" Internet call waiting (WICW) service allows a caller to contact a cell phone ("wireless device") user who is not reachable by virtue of the cell phone being used for data communication (via a packet-switched network connection, for example), or otherwise not available. WICW allows the wireless data user to be informed of an incoming call via a data message sent to the wireless device. Upon receiving an incoming voice call "alert", the wireless device user can switch to voice mode to take the call. Once the voice call is completed, the WICW service will switch back to resume the suspended transmission. Other options available to the wireless user include sending the incoming call to voice mail, sending the call to an alternative number or ignoring the call.

## Description

### Technical Field

The present invention relates to "wireless" Internet call waiting (WICW) and, more particularly, to the ability to allow a caller to contact a cell phone ("wireless device") user who is not reachable by virtue of the cell phone being used to transmit data (or otherwise not available).

### Background of the Invention

Call waiting is a conventional telecommunications feature that is commonly provided by a telephone switching office (e.g., a Central Office - CO) to alert a called party to an incoming call when the party's telephone station set is busy with another call. Such alerting is typically implemented by transmitting a subtle tone or "click" to the called party. The tone or click may also be heard by the party communicating with the called party. At that point, the called party may place the existing call on hold and answer the new incoming call.

It has generally been recognized that a telephone network/switching office cannot apply the call waiting feature to a telephone line that is connected to the Internet (or, in general, any data network). This limitation stems from the fact that the application of call waiting and/or voice signals to the telephone line would interfere with the data connection. Further, when a data call is established between a subscriber's telephone line and the Internet via an Internet Access Service (IAS), the subscriber is not able to "hear" the call waiting tone - even if the data connection/communication would be able to recover from the interference. Disadvantageously, then, a telephone subscriber who subscribers to call waiting cannot be notified that a call is waiting when the subscriber's line is connected to the Internet.

U.S. Patent 5,805,587 issued to J.H. Norris et al. on September 8, 1998 addresses this concern and discloses a services platform, connected to both the PSTN and data network, where a "call" that is waiting to be connected can be routed to the services platform. The platform may then forward the telephone call to the subscriber via the Internet (responsive to a subscriber request to do so) without interrupting the subscriber's Internet connection. While this arrangement is a significant advance, it is not directly applicable to the scenario where the called party is "busy" by virtue of being in the "data mode" - sending/receiving transmissions over a packet network using a wireless device.

In general, wireless devices operate in either a pure circuit-switched mode (e.g., TDMA, GSM) to carry voice or data, or in a mixed circuit-switched mode for voice and packet-switched mode (i.e., CDPD) for data. When sending data, a wireless user is not reachable by someone trying to call them. Instead, the caller is typically directed to a voice-mail system to leave a message.

Thus, a need remains in the art for a method of providing call waiting to wireless devices that are either "not available" or busy by virtue of being in the data mode.

### Summary of the Invention

The need remaining in the prior art is addressed by the present invention, which relates to "wireless" Internet call waiting (WICW) and, more particularly, to the ability to allow a caller to contact a cell phone ("wireless device") user who is not reachable by virtue of the cell phone being used to transmit data (or otherwise not available).

In accordance with the present invention, a "call answering system" (CAS) is incorporated into the communications system and is used to receive "unanswered" calls placed to a wireless device. These calls may be unanswered by virtue of the wireless device being turned "off", or unanswered by virtue of the device being in the data mode (if the device is "busy" by being involved in another voice call, traditional call waiting will be employed). The call that is passed to the CAS includes both the "calling party" telephone number and the mobile directory number (MDN) of the wireless device user. The CAS then passes the MDN to a wireless Internet call waiting (WICW) platform, which performs an MDN look-up in the database to determine both "static" information and "dynamic" information related to the wireless device (i.e., subscriber ID information, privacy information, IP address (if currently connected to the Internet), etc.).

If the data available to the WICW indicates that the wireless device is not reachable, this message is sent back to the CAS, which alerts the calling party of the same and may then offer the calling party the opportunity to leave a message and thus connects the calling party to a voice mail gateway. If the data available to the WICW indicates that the wireless device is reachable (but busy), this message will be sent to the CAS, and then either the CAS or WICW will transmit a message to the wireless device, via a data proxy gateway, indicating the presence of a "waiting" message for a voice call. The wireless device can then decide to take the call (putting the data transfer on "hold" without, advantageously, losing the data connection), send the call to voice mail, or exercise any other suitable option.

It is an advantage of the present invention that the data connection may be suspended if the wireless device user elects to pick up the waiting call. The ability to "suspend" the connection thus allows for the data network (e.g., Internet) connection to be maintained and does not require the user to "log off" the data transfer, take the call, then try to "log on" to resume the data transmission, which would be the case with any prior art alternative.

Other and further advantages of the present invention will become apparent during the course of the following discussion and by reference to the accompanying drawings.

### Brief Description of the Drawings

FIG. 1 illustrates an exemplary network environment suitable for implementing WICW service of the present invention; and
FIG. 2 contains an exemplary flow chart describing in particular the process used in providing WICW in accordance with the present invention.

### Detailed Description

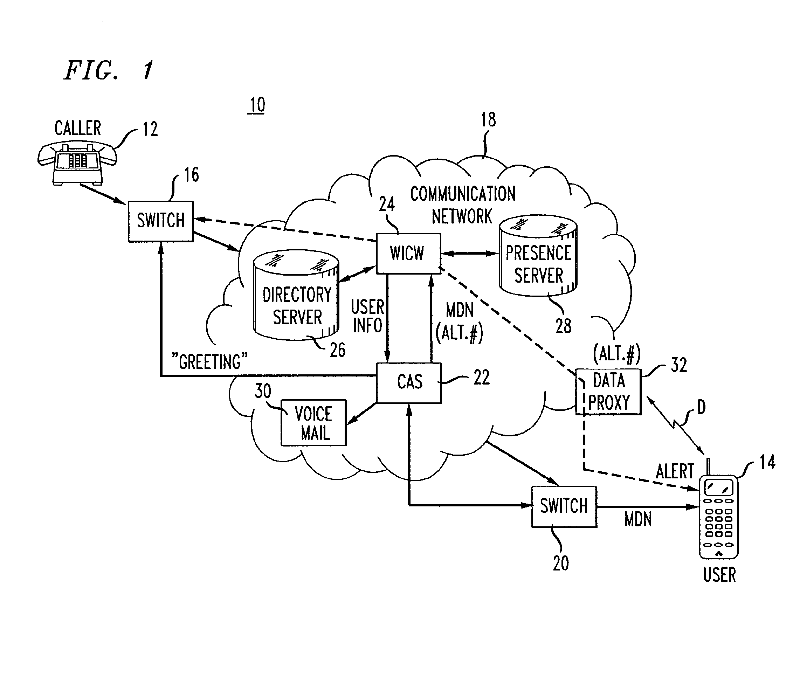

An exemplary network configuration 10 suitable for implementing Wireless Internet Call Waiting (WICW) in accordance with the present invention is illustrated in FIG. 1. Referring to FIG. 1, a caller 12 (which may be a traditional voice caller, an IP telephony caller, or other suitable call origination element) is attempting to place a call to a wireless device 14. The call first passes through a communication switch 16, traverses a communication network 18, and exits the network at a switch 20 located in the proximity of wireless device 14. As shown in FIG. 1, wireless device 14 is currently engaged in a data session (indicated by the arrows labeled "D" in FIG. 1) and is therefore "unavailable" to receive the call. Alternatively, the user of wireless device 14 may have the wireless device turned "off", or the user may have moved out of the coverage area of his/her associated wireless communication provider. Regardless of the circumstances, however, caller 12 is unable to reach the desired user at wireless device 14.

In accordance with the present invention, the call is then forwarded to a gateway device positioned between the public-switched telephone network (PSTN) and the Internet, hereinafter referred to as a call answering system (CAS) 22, where in particular both the calling number associated with caller 12 and the mobile directory number (MDN) associated with user 14 are forwarded to CAS 22. CAS 22 then passes the MDN to a wireless ICW (WICW) system 24. WICW 24 performs a look-up operation in an associated directory database 26, using the received MDN. Directory database 26 contains various static information for each wireless subscriber, including, for example, a data network (such as PocketNet) subscriber ID, privacy and/or call-filtering preferences. WICW system 24 also queries "presence" information (in general, "dynamic" information) in a server 28, where this dynamic information (such as, for example, the user's current IP address) is consolidated from a number of sources (including the PocketNet gateway, CDPD MD-IS, etc.) so as to ascertain the current "state" of wireless device 14. Directory database 26 and presence server 28 may be physically separate servers or, alternatively, may be separate partitions within a larger data structure. Referring back to FIG. 1, the retrieved information regarding the user of wireless device 14 and the current "status" of the device is then transmitted from WICW system 24 to CAS 22. If the user's information from directory database 26 includes a "custom greeting", that information is included in the transmission to CAS 22.

If the user is not reachable, based on the presence information, CAS 22 simply transfers the call to a conventional voice mail gateway 30 (or disposes of the call according to other, user-defined preference rules). If the user is "reachable" (that is, the wireless device is "active", but in a state of transmitting/receiving data over a packet network), a message to that effect is played for caller 12 (the message may also include a custom greeting, if one has been retrieved from directory database 26). CAS 22 may then send a request to WICW system 24 to contact wireless device 14 via the packet network or, alternatively, WICW system 24 may itself launch such an alert to wireless device 14 without waiting for a prompt from CAS 22. In either case, an alert is sent through a data proxy gateway 32 (such as a PocketNet gateway). In essence, the "alert" takes the form of a data message, indicating the presence of a "voice call" waiting for the user of wireless device 14. At this point, the user may be given several choices for how to dispose of the call. In particular, the caller may opt to send the incoming voice call to voice mail gateway 30, re-direct the call to an alternative number, refuse the incoming call, ignore the call, or place the data transfer on "hold" and immediately take the incoming call. All but the last option require the user to enter a choice into the wireless device that functions to send the call back through data proxy gateway 32 to CAS 22 for further call processing (such as, for example, transfer to voice mail 30).

If the user chooses to accept the incoming telephone call, wireless device 14 is switched from a "data" (i.e., packet-switched) mode to a "voice" (i.e., circuit-switched) mode and, in one embodiment, initiates an outbound call to a bridge number. In accordance with the present invention, the bridge number is supplied from CAS 22 to WICW system 24, then to data proxy gateway 32. The user-initiated (outbound) call is then bridged with the incoming call by CAS 22. Alternatively, CAS 22 may initiate the outbound call to wireless device 14 to bridge together the two voice calls. In accordance with the present invention, upon completion of the voice call, the user then switches wireless device 14 back to the "suspended" data mode. Advantageously, the WICW system of the present invention allows for the data communication to be "suspended" through data proxy gateway 32, and then resumed when the voice call is completed. This is preferred to requiring the user of wireless device 14 to "log off" to take the voice call, then log back on to resume the data session.

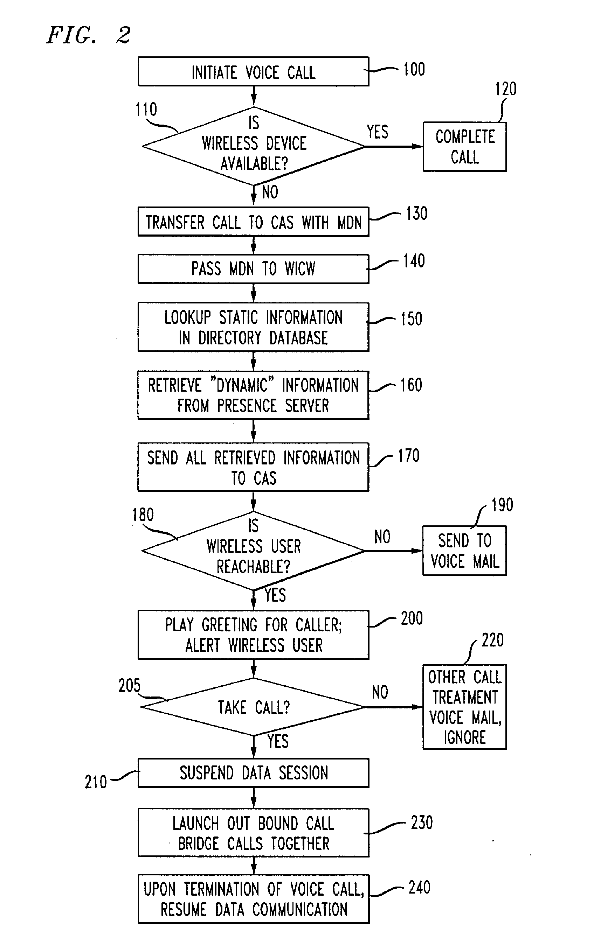

An exemplary method of providing wireless Internet call waiting (WICW) is illustrated by the flowchart of FIG. 2. The method begins with the caller initiating a voice call to a wireless device (block 100) and a first determination is made (block 110) regarding the status of the wireless device. If the wireless device is available to accept an incoming call, the call is completed (block 120). If the wireless device is not available (including, for example; being involved in a data transfer, being turned "off', or being beyond the wireless device coverage area), the incoming call is transferred (with the identifying "mobile directory number" (MDN) of the wireless device) to a call answering system (block 130). The MDN is then sent to a "wireless Internet call waiting" (WICW) system (block 140), where the WICW system looks up the MDN in a directory server (block 150) to retrieve associated information related to the wireless device user. The "static" information may include, as mentioned above, PocketNet subscriber ID, privacy or call-filtering preferences. The WICW system also queries a "presence server" (block 160) to ascertain dynamic information related to the "status" of the wireless device (including, for example, the IP address of wireless device 14).

All of the retrieved information is then sent to the CAS (block 170) to determine the proper treatment for the incoming call. In particular, a determination is made (block 180) regarding the ability to "reach" the wireless device, based on the "presence" information. If the "presence" information indicates that the wireless device is not reachable (i.e., turned "off"), the CAS will simply pass the incoming call to the voice mail gateway (block 190). Alternatively, if the device is "reachable", a message to that effect will be played for the caller, and the user will be alerted that there is an incoming voice call for the wireless device (block 200). The wireless user can then "suspend" the data session and take the call (block 210). Other options for the wireless user include sending the call to voice mail, re-directing the call to another number or ignoring the call (block 220). If the user decides to answer the call, the data transfer is suspended and an outgoing call is launched (either by CAS or WICW) to bridge together the two voice calls at the CAS (block 230). Once the voice call is completed, the user then re-activates the suspended data transfer (block 240). Advantageously, the WICW service of the present invention allows for the data session to be "suspended" during the voice call, without requiring the user to log off and then back on to restore data transmission.

Although this invention has been illustrated by reference to a specific embodiment, it will be apparent to those skilled in the art that various changes and modifications may be made that clearly fall within the scope of the present invention. In particular, the invention is intended to be broadly protected within the spirit and scope of the appended claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A system for providing call waiting in association with a wireless device, the system comprising
a call answering system for receiving a forwarded call upon determination that a wireless device is unable to receive an incoming call, the forwarded call including a mobile directory number (MDN) associated with the wireless device;
a wireless data network call waiting system for receiving the forwarded MDN from the call answering system and determining user features associated with the forwarded MDN and determining the current status of the wireless device;
a server coupled to the wireless data network call waiting system and including a database of user feature information for each registered MDN and information regarding the current status of the wireless device associated with the forwarded call; and
a data proxy gateway coupled between the wireless data network call waiting system, call answering system and the wireless device for transmitting call waiting alert messages to the wireless device and receiving call treatment instructions from the wireless device.

2. The system as defined in claim 1 wherein the data network is defined as the Internet.

3. The system as defined in claim 1 wherein the server comprises
a static directory server including the database of user feature information for each registered MDN; and
a dynamic presence server including status information for wireless devices coupled to the Internet.

4. The system as defined in claim 3 wherein the user feature information included in the static directory server includes subscriber ID, privacy information and call-filtering preferences.

5. The system as defined in claim 3 wherein the status information included in the dynamic presence server includes a current IP address.

6. The system as defined in claim 3 wherein the static directory server and the dynamic presence server comprise separate partitions in a single database structure.

7. The system as defined in claim 3 wherein the static directory server and the dynamic presence server comprise physically separate database structures.

8. The system as defined in claim 1 wherein the system further comprises a voice mail gateway arrangement coupled to the call answering system for accepting calls not connected to the wireless device.

9. The system as defined in claim 1 wherein the forwarded call is a forwarded voice call.

10. A method of providing data network call waiting service to a wireless device, the method comprising the steps of:
a) forwarding an incoming call directed to an unavailable wireless device to a call answering system;
b) passing a mobile directory number associated with the unavailable wireless device to a wireless Internet call waiting system;
c) retrieving, from a database associated with the wireless data network call waiting system, static user information associated with the mobile directory number and dynamic information regarding the current state of the unavailable wireless device;
d) transferring the information retrieved in step c) to the call answering system of step a);
e) if, based upon the presence information, the wireless device is reachable,
e1) sending an alert message to the wireless device that an incoming call is waiting; and
e2) disposing of the call in accordance with the preference of the wireless device user, otherwise
f) disposing of the call by transferring the incoming call to another location, terminating the call, or handling the call using a predefined preference of the wireless device user.

11. The method as defined in claim 10 wherein in performing step c), the following steps are performed:
1) retrieving, from a directory server, static user information associated with the mobile directory number; and
2) retrieving, from a presence server, dynamic information regarding the current state of the wireless device.

12. The method as defined in claim 10 wherein in performing step e1), the alert message is sent from the call answering system to the wireless device.

13. The method as defined in claim 10 wherein in performing step e1), the alert message is sent from the wireless data network call waiting system to the wireless device.

14. The method as defined in claim 10 wherein in performing step e2), the disposition of call includes one of the following options: refusing the call, ignoring the call, accepting the call, transferring the call to voice mail or transferring the call to an alternative telephone number.

15. The method as defined in claim 14 wherein in performing step e2), if the forwarded call is accepted, performing the additional step of suspending an ongoing data communication.

16. The method as defined in claim 10 wherein in performing step f) the call is transferred to a voice mail system.

17. The method as defined in claim 10 wherein in performing step f), the call is transferred to an alternative telephone number.
